(19) **Europäisches Patentamt / European Patent Office / Office européen des brevets**

(11) **EP 1 483 915 B1**

(12) **FASCICULE DE BREVET EUROPEEN**

(45) Date de publication et mention
de la délivrance du brevet:
**03.11.2010 Bulletin 2010/44**

(21) Numéro de dépôt: **03727577.3**

(22) Date de dépôt: **07.03.2003**

(51) Int Cl.:
**H04N 7/24** (2006.01)

(86) Numéro de dépôt international:
**PCT/FR2003/000754**

(87) Numéro de publication internationale:
**WO 2003/077561 (18.09.2003 Gazette 2003/38)**

(54) **PROCEDE DE TRANSMISSION DE FLUX DE DONNEES DEPENDANTS**

VERFAHREN ZUM ÜBERTRAGEN VON ABHÄNGIGEN DATENSTRÖMEN

METHOD FOR THE TRANSMISSION OF DEPENDENT DATA FLOWS

(84) Etats contractants désignés:
**AT BE BG CH CY CZ DE DK EE ES FI FR GB GR HU IE IT LI LU MC NL PT RO SE SI SK TR**

(30) Priorité: **08.03.2002 FR 0202992**

(43) Date de publication de la demande:
**08.12.2004 Bulletin 2004/50**

(73) Titulaire: **FRANCE TELECOM**
**75015 Paris (FR)**

(72) Inventeur: **COTARMANAC'H, Alexandre**
**F-35350 Saint Meloir Des Ondes (FR)**

(74) Mandataire: **Vidon, Patrice**
**Cabinet Vidon**
**Technopole Atalante**
**16B Rue de Jouanet**
**BP 90333**
**35703 Rennes Cedex 7 (FR)**

(56) Documents cités:
**EP-A- 1 113 614     EP-A- 1 133 189**
**WO-A-00/04723     US-B1- 6 205 140**

- **HERPEL C ET AL: "MPEG-4 SYSTEMS: ELEMENTARY STREAM MANAGEMENT" SIGNAL PROCESSING. IMAGE COMMUNICATION, ELSEVIER SCIENCE PUBLISHERS, AMSTERDAM, NL, vol. 15, janvier 2000 (2000-01), pages 299-320, XP000885367 ISSN: 0923-5965**
- **WEE S J ET AL: "SECURE SCALABLE STREAMING ENABLING TRANSCODING WITHOUT DECRYPTION" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY: IEEE, US, vol. 1 OF 3. CONF. 8, 7 octobre 2001 (2001-10-07), pages 437-440, XP001104045 ISBN: 0-7803-6725-1**
- **BOTTREAU V ET AL: "A FULLY SCALABLE 3D SUBBAND VIDEO CODEC" , PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY: IEEE, US, VOL. VOL. 2 OF 3. CONF. 8, PAGE(S) 1017-1020 XP001045747 ISBN: 0-7803-6725-1 abrégé alinéa [03.5] figure 4**

EP 1 483 915 B1

**Description**

Le domaine de l'invention est celui de la transmission de données, sous la forme d'un ou plusieurs flux de données constitués chacun d'unités de flux élémentaires. Plus précisément, l'invention concerne l'optimisation du traitement de ces unités de flux élémentaires, lorsque celles-ci sont dépendantes de, ou lier à, une ou plusieurs autres unités de flux.

Lorsqu'un signal, par exemple de type multimédia, est transmis sur un canal unique et de façon synchrone, le traitement d'une unité de flux ne pose pas, ou peu, de problème. Les données nécessaires ont été reçues précédemment.

Cela n'est pas le cas, en revanche, dans des systèmes asynchrones, pouvant mettre en oeuvre plusieurs canaux de transmission, et/ou plusieurs serveurs distribuant chacun une partie du signal utile. C'est par exemple le cas de la transmission, ou de la diffusion, sur un réseau type IP.

Dans ce cas, il arrive que l'on reçoive une unité de flux qui est sensée en compléter d'autres, qui n'ont pas été reçues. Il peut par exemple s'agir de données d'enrichissement de données d'un niveau hiérarchique supérieur, les données étant codées à l'aide d'un codage hiérarchique (un flux pouvant alors correspondre à un niveau hiérarchique donné). Le traitement des données d'enrichissement va alors donner un résultat aléatoire, conduisant en général à une forte dégradation du signal restitué, voire à un blocage complet du décodeur.

L'art antérieur (voir par exemple l'étude "MPEG-4 Systems : Elementary Stream Management", par C. Herpel, A. Eleftheriadis) en matière de synchronisation multimedia est représenté essentiellement par les protocoles de transport basés sur RTP et par MPEG-4 (Synchronization Layer). Dans l'approche utilisée, les mécanismes de synchronisation ont été principalement conçus pour synchroniser temporellement un flux audio et un flux vidéo, afin qu'ils soient présentés sans décalage. Ces informations étaient véhiculées au moyen d'un système d'estampillage temporel (une horloge de référence, des estampilles de décodage et de présentation).

Avec l'avènement de codages hiérarchiques, où différents niveaux d'enrichissement temporel et spatial sont utilisés afin de produire une trame présentable, l'inventeur a constaté qu'un nouveau besoin de synchronisation apparaît.

En effet, il est nécessaire de synchroniser les flux avant leur décodage (et non pas seulement à leur présentation). Cette contrainte s'avère plus complexe que la synchronisation de présentation car il est nécessaire d'identifier quelles sont les unités nécessaires au décodage d'une unité afin de produire une trame correcte. Un seul décalage peut rendre inutile tout un flux ainsi que tous les flux basés sur ce dernier. Il s'agit là d'un problème nouveau, et non évident, identifié par l'inventeur.

Un problème similaire se pose lorsqu'une unité de flux reçue doit être décodée, ou décryptée, à l'aide d'informations (par exemple une clé de décodage) que le terminal aurait dû recevoir, mais qu'il n'a pas reçues. A nouveau, le résultat du décodage sera au minimum inefficace, en général nuisible (en termes de signal restitué), et peut conduire au blocage du terminal. Dans les deux cas, un traitement inutile et néfaste aura été effectué.

Un autre problème important rencontré dans les systèmes de diffusion (« multicast » ou « broadcast ») est que les mêmes informations doivent être multidiffusées, pour permettre à un utilisateur se connectant à un instant quelconque de recevoir l'intégralité du ou des flux qu'il a sélectionnés. Cet aspect spécifique est déjà discuté dans la demande de brevet EP-01 4600462, non encore publiée, aux noms des titulaires de la présente demande de brevet. Selon cette technique, le traitement est effectué au niveau du transport, ce qui impose un traitement de chaque unité de flux, tenant compte des spécificités des différents types de transport.

L'art antérieur en matière de représentation multimédia dans des scenarii « broadcast » et « multicast » est décrit dans la spécification du « carousel MPEG-4 ». Cependant un certain nombre de fonctionnalités sont interdites ou rendues extrêmement consommatrices en débit. Dans les deux scenarii de délivrance considérés, il est nécessaire de signaler des points d'entrée à la présentation multimédia à tout moment. Ceci se traduit par une répétition des données relatives à la description de la scène : scène BIFS, textures.

Dès que le contenu multimédia devient riche, cette répétition simple n'est pas acceptable et conduit à des temps de téléchargement excessifs. Par ailleurs, cette spécification ne permet pas de diffuser certains éléments multimédia (clips audio/vidéo de courte durée).

L'invention a notamment pour objectif de pallier ces différents inconvénients de l'état de l'art.

Plus précisément, un objectif de l'invention est de fournir une technique permettant de gérer efficacement des unités de flux, lorsque celles-ci dépendent de, ou sont liées à, une ou plusieurs autres unités de flux.

Notamment, un objectif de l'invention est de fournir une telle technique, qui permette la gestion de flux liés, en particulier dans le cas de données codées à l'aide d'un codage hiérarchique, ou un codage comprenant un codage associant des données de base et des données d'enrichissement.

Un autre objectif de l'invention est de fournir une telle technique, permettant d'assurer efficacement la gestion du décodage, ou du décryptage, d'unités de flux.

Encore un autre objectif de l'invention est de fournir une telle technique, qui permette d'optimiser la transmission de scenarii multidiffusés, et notamment de réduire la quantité de ressource utilisée, sans réduire la qualité de la réception.

L'invention a pour objectif, en d'autres termes, d'optimiser les traitements effectués, dans les terminaux, tant en quantité qu'en qualité.

Ces objectifs, ainsi que d'autres qui apparaîtront par la suite, sont atteints selon l'invention à l'aide d'un procédé de transmission d'au moins un flux de données vers au moins un terminal, le ou lesdits flux étant organisés en unités de flux. Selon l'invention, au moins certaines desdites unités de flux comprennent au moins un pointeur pointant vers au moins une unité de flux dudit flux ou d'un autre flux susceptible d'avoir été reçue précédemment dans un terminal, dite unité antérieure nécessaire, de façon qu'un traitement de ladite unité de flux ne soit pas effectué, dans ledit terminal, si la ou lesdites unités antérieures nécessaires n'ont pas été reçues.

On dispose ainsi d'un système de synchronisation logique, permettant de faciliter la gestion des unités de flux, de limiter les traitements dans les terminaux, d'améliorer la qualité de restitution,...

Le format de données ainsi défini, selon l'invention, peut être mis en oeuvre non seulement pour la transmission et la réception de flux, mais également pour leur diffusion, leur enregistrement et leur stockage.

L'invention repose donc notamment sur l'identification du problème nouveau de la synchronisation « arrière » des flux ou des unités de flux, et sur l'observation non évidente que la solution la plus efficace est de ne pas traiter les unités de flux lorsque l'on ne dispose pas de tous les éléments pour le faire. Il apparaît en effet préférable, en termes de restitution de signal, d'ignorer une unité de flux plutôt que d'en effectuer un décodage qui conduira à une détérioration du signal restitué, voire à un blocage complet du terminal.

De façon avantageuse, le procédé de l'invention comprend la transmission d'au moins deux flux de données transmis séparément, une unité de flux d'un premier flux pointant vers au moins une unité antérieure nécessaire d'au moins un second flux, ladite unité de flux du premier flux comprenant des données d'enrichissement des données contenues dans le ou lesdits seconds flux.

Dans ce cas, lesdits flux de données peuvent avantageusement correspondre à des niveaux hiérarchiques différents d'un codage hiérarchique, le traitement d'une unité de flux d'un niveau hiérarchique donné n'étant effectué que si les unités de flux du ou des niveaux hiérarchiques inférieurs correspondants ont été reçus.

Ladite unité de flux peut pointer sur au moins une unité antérieure, définissant une séquence d'unités antérieures nécessaires.

Selon une caractéristique avantageuse de l'invention, au moins un desdits pointeurs permet de retrouver au moins une unité antérieure nécessaire comprenant des données permettant le décodage et/ou le décryptage de l'unité de flux considérée.

Préférentiellement, la ou lesdites unités antérieures nécessaires comprennent des données permettant à un terminal de décider si les données d'une unité de flux considérée doivent être décodées et/ou décryptées, puis affichées après décodage.

Selon une autre mise en oeuvre avantageuse, au moins un desdits pointeurs pointent vers des données susceptibles d'être connues dudit terminal, de façon que ce dernier puisse décider de sa capacité ou de son incapacité à traiter l'unité de flux correspondante.

De façon avantageuse, selon un autre aspect de l'invention, au moins une desdites unités de flux comprend au moins un pointeur pointant vers au moins une unité de flux dudit flux ou d'un autre flux, susceptible d'être reçue prochainement.

Préférentiellement, la ou lesdites unités de flux susceptible d'être reçue prochainement possède en marqueur, permettant de faire un lien avec le ou lesdits pointeurs.

Ainsi, avantageusement, les pointeurs d'au moins deux unités de flux similaires transmises à des instants distincts peuvent pointer vers une même unité de flux susceptible d'être reçue prochainement.

De façon préférentielle, le procédé de l'invention met en oeuvre un indicateur indiquant le rôle du ou des pointeurs, parmi au moins deux des rôles appartenant au groupe comprenant :

- désignation d'au moins une unité de flux antérieure devant être décodée pour permettre la prise en compte de l'unité de flux considérée ;
- désignation d'au moins une unité de flux antérieure comprenant des données nécessaires au décodage et/ou au décryptage de l'unité de flux considérée, et/ou d'une référence à un état d'un système de protection ;
- désignation d'au moins une unité de flux postérieure.

Avantageusement, au moins certaines desdites unités de flux comprennent un descripteur de dépendance, définissant ledit rôle.

De façon avantageuse, au moins certaines desdites unités de flux comprennent un marqueur de dépendance, permettant son identification en tant qu'unité antérieure nécessaire et/ou un marqueur d'identification de ladite unité de flux dans ledit flux.

Préférentiellement, le procédé de l'invention est mis en oeuvre au niveau synchronisation, de façon qu'aucun traitement préalable d'une unité de flux reçue ne soit nécessaire.

L'invention concerne également un ou plusieurs flux de données transmis selon le procédé de transmission décrit ci-dessus. Comme déjà mentionné, un tel format de données peut être utilisé pour la transmission, la diffusion, la réception, l'enregistrement (par exemple via un magnétoscope ou un enregistreur de disques optiques) et le stockage de données (par exemple sur un CD-ROM, une bande, un serveur distant...).

On notera également que l'invention permet de combiner aisément plusieurs de ces aspects. Par exemple, certains flux peuvent être diffusés, et d'autres fournis sur un CD-ROM, ou un serveur, la connaissance des seconds étant nécessaires pour décoder (ou optimiser) les premiers.

Un tel flux de données est organisé en unités de flux transmises indépendamment les unes des autres, au moins certaines desdites unités de flux comprenant au moins un pointeur pointant vers au moins une unité de flux dudit flux ou d'un autre flux susceptible d'avoir été reçue précédemment dans un terminal, dite unité antérieure nécessaire, de façon qu'un traitement de ladite unité de flux ne soit pas effectué, dans ledit terminal, si la ou lesdites unités antérieures nécessaires n'ont pas été reçues.

L'invention concerne également les serveurs de données destinées à être transmises vers au moins un terminal, sous la forme d'au moins un flux de données organisé en unités de flux transmises indépendamment les unes des autres, au moins certaines desdites unités de flux comprenant au moins un pointeur pointant vers au moins une unité de flux dudit flux ou d'un autre flux susceptible d'avoir été reçue précédemment dans un terminal, dite unité antérieure nécessaire.

L'invention concerne encore les terminaux apte à recevoir au moins un flux de données organisé en unités de flux transmises indépendamment les unes des autres, au moins certaines desdites unités de flux comprenant au moins un pointeur pointant vers au moins une unité de flux dudit flux ou d'un autre flux susceptible d'avoir été reçue précédemment dans un terminal, dite unité antérieure nécessaire.

L'invention concerne également les procédés de réception d'au moins un flux de données organisé en unités de flux transmises indépendamment les unes des autres, au moins certaines desdites unités de flux comprenant au moins un pointeur pointant vers au moins une unité de flux dudit flux ou d'un autre flux susceptible d'avoir été reçue précédemment dans un terminal, dite unité antérieure nécessaire, et le procédé de réception comprend les étapes suivantes :

- analyse du ou desdits pointeurs d'une unité de flux ;
- traitement de ladite unité de flux si la ou lesdites unités antérieures nécessaires ont été reçues.

L'invention concerne enfin les utilisations du procédé de transmission, en particulier pour une des applications appartenant au groupe comprenant :

- diffusion systématique d'un message avant accès à un programme sélectionné par un utilisateur ;
- accès conditionnel à un niveau de qualité particulier et/ou à une option particulière d'un programme ;
- télévision interactive.

D'autres caractéristiques et avantages de l'invention apparaîtront plus clairement à la lecture de la description suivante d'un mode de réalisation préférentiel de l'invention, donné à titre de simple exemple illustratif, et des dessins annexés, parmi lesquels :

- la figure 1 illustre le principe de la gestion de la dépendance d'un flux de données par rapport à un autre, selon l'invention ;
- la figure 2 présente une mise en oeuvre de l'invention, dans le cas de la diffusion d'un flux (« broadcast ») et de sa réception par deux terminaux, sous la forme de sessions décalées dans le temps ;
- la figure 3 illustre le cas d'une synchronisation liée au décodage, ou au décryptage, d'une unité de flux (IPMP) ;
- la figure 4 présente une variante du cas de la figure 3, avec deux points de protection (décodage et rendu).

Le mode de réalisation préférentiel décrit ci-après concerne notamment la transmission de flux, dans un système multimédia, notamment du type MPEG4.

## 1. rappels sur la technique antérieure :

La technique antérieure ne permet ni de prendre en compte la transmission efficace (en termes de débit et de fonctionnalité) de scènes multimedia dans des scénarii multicast ou bien broadcast ni la synchronisation de flux interdépendants des éléments liés au contenu de type clefs de contrôle d'accès.

### 1.1 représentation multimédia dans des scénarii broadcast et multicast

Une solution est proposée dans la spécification du « carousel MPEG-4 ». Cependant un certain nombre de fonctionnalités sont interdites ou rendues extrêmement consommatrices en débit. Dans les deux scenarii de délivrance considéres, il est nécessaire de signaler des points d'entrée à la présentation multimedia à tout moment. Ceci se traduit par une répétition des données relatives à la description de la scène : scène BIFS, textures.

Dès que le contenu multimedia devient riche cette répétition simple n'est pas acceptable et conduit à des temps de téléchargement excessifs. Par ailleurs, cette spécification ne permet pas de diffuser certains éléments multimédia (clips audio/vidéo de courte durée).

Par ailleurs, dans la demande de brevet non encore publiée EP-01 4600462, les données étaient véhiculées au niveau du transport. En revanche, selon l'invention, le tout se trouve au niveau de la couche dite de synchronisation qui est indépendante du transport.

Ceci a pour avantage de s'abstraire des différents types de transport et d'unifier les informations de synchronisation temporelle et logiques ainsi que les marqueurs d'accès aléatoire en un même point, ceci permet de calculer à un endroit unique la décision de conserver ou pas l'unité. Il s'avère que l'on connaît par ailleurs bien plus d'informations sur le flux, ce qui permet de spécialiser les décisions par type de flux (intéressant pour vidéo/audio par rapport à BIFS, etc).

1.2 synchronisation multimédia

L'art antérieur en matière de synchronisation multimedia est représenté essentiellement par les protocoles de transport basés sur RTP et par MPEG-4 (Synchronization Layer). Dans l'approche utilisée, les méchanismes de synchronisation ont été principalement conçus pour synchroniser temporellement un flux audio et un flux vidéo, afin qu'ils soient présentés sans décalage. Ces informations étaient véhiculées au moyen d'un système d'estampillage temporel (une horloge de référence, des estampilles de décodage et de présentation)

Avec l'avènement de codages hiérarchiques où de différents niveaux d'enrichissement temporel et spatial sont utilisés afin de produire une trame présentable, un nouveau besoin de synchronisation apparaît. En effet, il est nécessaire de synchroniser les flux avant leur décodage (et non pas seulement à leur présentation). Cette contrainte s'avère plus complexe que la synchronisation de présentation car il est nécessaire d'identifier quels sont les unités nécessaires au décodage d'une unité afin de produire une trame correcte. Un seul décalage peut rendre inutile tout un flux ainsi que tous les flux basés sur ce dernier. Comme on le voit, il s'agit d'un problème de dépendance logique entre unités à décoder.

Un intervalle de temps réduit est déjà pris en compte dans MPEG-4 vidéo, mais celui-ci n'est pas accessible aux couches système.

1.3 protection des données

Un troisième cas de synchronisation n'est pas abordé dans l'art antérieur : celui de la synchronisation d'un flux de protection de données lié à un flux multimedia.

Dans ce cas, il est nécessaire de s'assurer que toute unité de flux multimedia sera décryptée avec une clé correcte avant d'être décodée (le cas échéant les résultats ont toute chances d'être catastrophiques). Dès lors que les flux ne sont pas assurés d'être synchrones, les outils de synchronisation ne peuvent assurer ceci.

Cette fois-ci, l'entrée du décodeur et la sa sortie sont des points de synchronisation (la trame décodée peut à son tour être cryptée).

**2. principes de l'invention**

Les buts de l'invention sont notamment de permettre :

- La diffusion multicast et broadcast de scènes multimedia ;
- La synchronisation logique du décodage multimédia.

Ceci est obtenu à l'aide de mécanismes de signalisation permettant d'atteindre ces deux objectifs :

- Mécanisme permettant configurer un flux afin que chacune des unités temporelles le composant s'identifient de façon paramétrable.
- Mécanisme de chaînage avant pour les scénarii de diffusion/broadcast.

Les éléments techniques essentiels de l'invention sont ainsi :

- Eléments de synchronisation logique entre éléments de plusieurs flux ou dans le même flux (vidéo, audio, et système de protection de données) ;
- La solution permet pour chaque élément du flux d'indiquer de quel type d'éléments il dépend, et de quels éléments en particulier il dépend. Plusieurs mises en oeuvre sont possibles.

On utilise notamment, sous toute forme de réalisation :

- Descripteur de dépendance : « DependencyDescriptor » ;
- Marqueur de dépendance : « DependencyMarker» (Optionnellement) ;
- Pointeur sur l'unité dont on dépend : « Dependency Pointer » ;
- Marqueur (identifie une unité du flux) : « marker » (Optionnellement).

**3. Description détaillée d'au moins un mode particulier de réalisation :**

3.1 spécification MPEG4

L'annexe 1 présente de façon détaillée un exemple de mise en oeuvre de l'invention pour des normes de type MPEG, sous la forme d'une spécification MPEG-4.

3,2 comportement du récepteur

Le terminal reçoit un IOD (InitialObjectDescriptor) celui-ci fait référence par l'intermédiaire de leurs descripteurs (ObjectDescriptor) à au moins un objet de description de scène graphique (flux BIFS : F_BIFS) et optionnellement à au moins un objet de description d'objets graphiques (flux d'OD : F_OD). Le terminal va ouvrir ces flux en se basant sur les informations présentées ci-après.

Chacun de ces descripteurs d'objet contient un descripteur par flux élémentaire (ES) qui le compose (ESDescriptor). Chaque ESDescriptor contient un champ **dependsOnESID** et un **SLConfigDescriptor.**

Le champ **dependsOnESID** permet de construire le graphe des dépendances entre flux identifiés par leur **ESID.**

L'objet **SLConfigDescriptor** permet de configurer les outils de synchronisation.

On trouvera dans l'objet SLConfigDescriptor la possibilité de configurer le récepteur afin qu'il vérifie les différentes dépendances de la façon suivante :

```
DependencyMarker                    //permet de configurer le
stream afin qu'il identifie ses paquets.
        {
              int (5) markerLength;
        }
DependencyDescriptor                //permet de décrire les
liens de dépendance.
        {
              int(2) mode;          // 0 : mode version par DTS,
```

```
// 1 :mode version par ID,

// 2 : mode scalable,

// 3 : mode IPMP

        // si mode==1 la dépendance se fait % à un

marqueur dans le stream.

        // si mode==3 la dépendance se fait de façon opaque

(le système IPMP se doit de

        //      comprendre la dépendance et de valider ou

non le décodage/décryptage.

        //      éventuellement en utilisant un marker. Il

s'agit donc d'un code

        //   .   qui permet au système de protection de

savoir s'il s'agit ou non d'une

        //      unité décryptable (ou non)

        // si mode==0 ou mode==2, la dépendance est

calculée sur le DTS

        //      par conséquent depLength == dtsLength dans

le SLConfig correspondant.

    int(5) depLength;

    if (mode==1 II mode==0)

    {

        int(depLength) value; //valeur de la première unité à

chercher.

    }

}
```

Ainsi, un flux peut se déclarer dépendant d'un autre flux (lui-même, un media normal ou IPMP). Dans ce cas, il décrit dans sa configuration SL comment il va signaler cette dépendance (Dependency descriptor) dans quatre modes distincts :

*32.1 Mode version par DTS et par ID (modes 0 et 1) :*

Le flux va signaler pour chacune de ces AccessUnits (AU)une dépendance avant dans le flux lui-même. Dans d'autres termes l'AU(n) précise quelle est la prochaine AccessUnit à décoder. Cette signalisation se fait au moyen d'un marqueur dans chaque paquet qui décrit ou bien, dans le mode 0 le DTS de la prochaine Access Unit (unique) ou bien l'ID de la prochaine Access Unit dans le mode 1.
Dans ce cas on rajoute la valeur du premier élément à récupérer.

Il peut par exemple s'agir d'un flux BIFS en mode broadcast/multicast.

*32.2 Mode scalable (mode 2) :*

Le flux va signaler pour chacune de ces Access Units une dépendance par rapport à un flux dont il dépend. Ce flux est supposé unique.

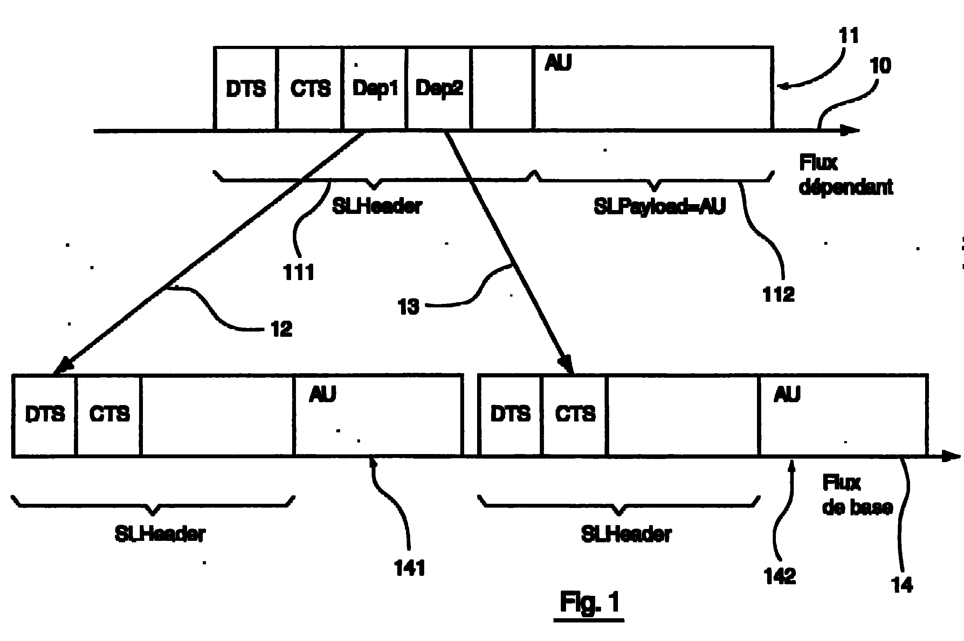

Ce principe est illustré par la figure 1. L'unité de flux 11 d'un flux dépendant 10 comprend classiquement un en-tête (SLHeader) 111 et un champ de données (SL payload) 112. L'en-tête 111 comprend notamment deux pointeurs Dep1 et Dep2, qui définissent des liens de dépendance 12 et 13 avec des unités de flux 141 et 142 respectivement d'un flux de base 14, dont la connaissance est nécessaire pour traiter l'unité de flux 11.

*3.2.3 Mode IPMP (mode 3) :*

Le flux va signaler pour chacune de ces AccessUnits un identificateur qui permet au système de protection de données de décoder l'unité. Celui-ci étant donné ce marqueur peut répondre si oui ou non il sait décrypter l'unité.

Le SLConfigDescriptor peut contenir un ou plusieurs DependencyDescriptor et un ou plusieurs Dependency-Marker, ce qui permet de régler les différents cas de dépendance dans le flux. (A priori un seul DependencyMarker suffit, mais on peut éventuellement en avoir plusieurs)

Ainsi si le SLConfig contient DependencyMarker, il signalera un ID de version pour chacun de ses paquets (modes 1 et 3).

Dans l'entête d'un paquet SL correspondant à une AccessUnit on trouvera donc:

- Pour chaque dependencyMarker du SLConfigDescriptor, un **marker** de longueur markerLength.
- Pour chaque DependencyDescriptor un **dependencyPointer** de longueur depLength.

Une fois ces différents marquages réalisés, le système est à même de :

    a) Fonctionner en mode « broadcast » grâce aux modes 0 et 1 ;
    b) Gérer les dépendances de scalabilité ;
    c) Gérer les dépendances IPMP ;

et les combinaisons de a),b),c).

### 3.3 Description du fonctionnement en mode IPMP

Lors de la réception de l'ObjectDescriptor relatif à un objet, le terminal examine le SLConfigDescriptor pour chacun des flux associés. Ceci permettra de décoder l'entête des paquets SL pour chacun des flux : en particulier de décoder les marqueurs.

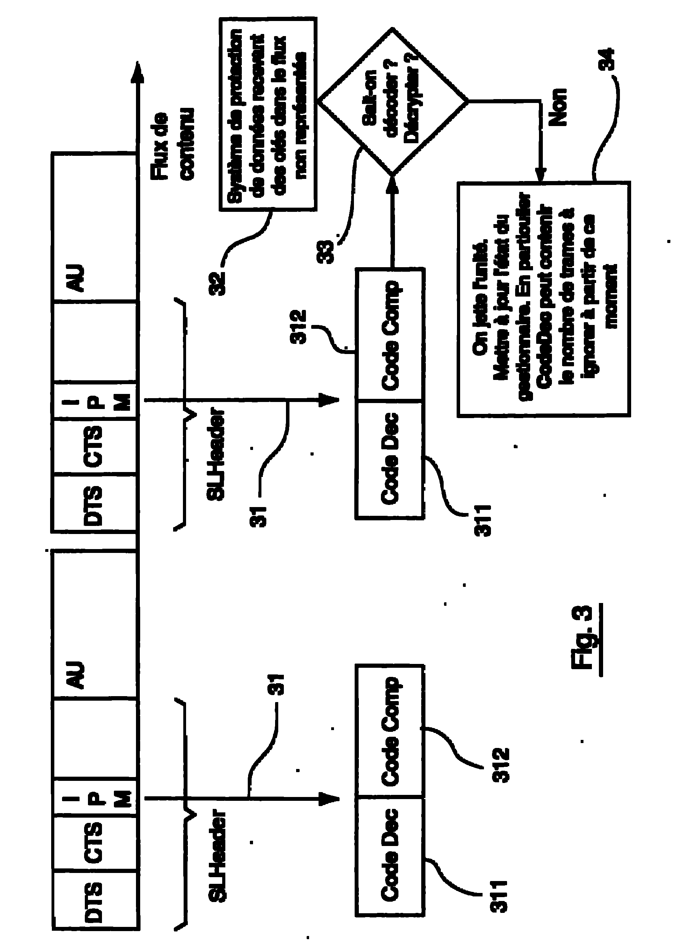

Dans le cas IPMP il y aura des DTS et/ou des dependencyPointer, ainsi que cela est illustré en figure 3.

Pour chaque AU du flux, avant que celui-ci ne soit décodé, il est traité par le système IPMP 32, en lui fournissant au moins les données suivantes identifiant de flux ESID, DTS, dependencyPointer (IPM) 31. Le système IPMP répond alors (33) s'il est en mesure de traiter (décrypter) l'AU, en considérant l'information 311 (Code Dec) relative au décodage. Si ce n'est pas le cas et que le DTS de l'unité est arrivé à maturité, l'AU est détruite (34). On n'essaie donc pas de décoder des AU non cohérentes.

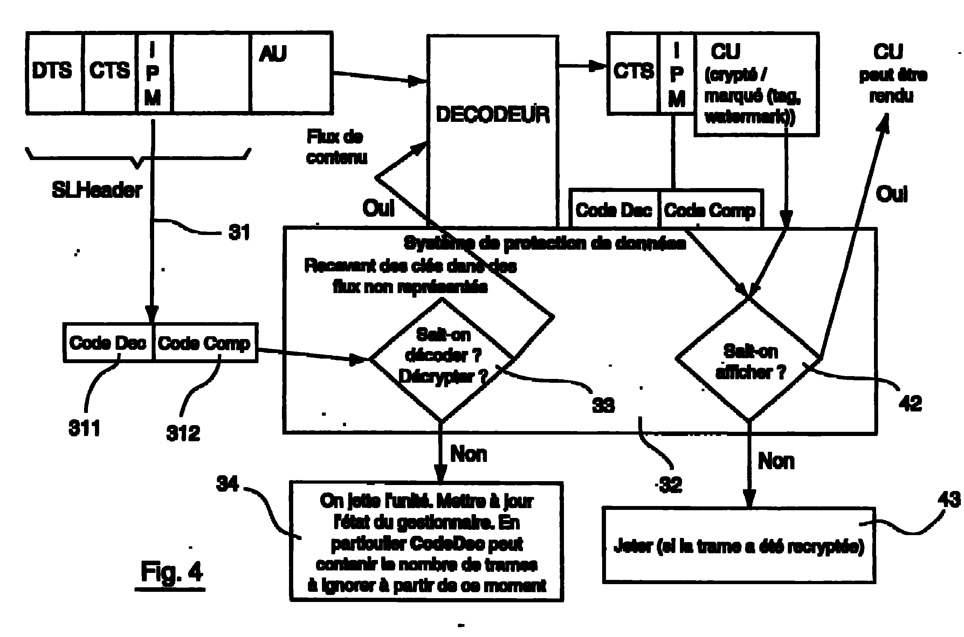

Dans l'exemple de la figure 4, on retrouve d'une part les éléments de la figure 3, et d'autre part un traitement lié à la restitution de l'image, après son décodage 41. En effet, à l'aide du champ 312 (CodeComp), on peut transmettre des données relatives à la composition, tel que l'ajout d'un tatouage ou d'un message sur l'image. Si le système de protection de données 32 ne sait pas gérer cette composition (il ne sait pas afficher l'image (42)), par exemple parce que le décodeur ne dispose par du tatouage requis, l'image n'est pas affichée (43).

On peut également prévoir que la trame sera marquée par exemple d'un logo, qui disparaît si le décodeur dispose de la bonne clé.

### 3.4 Description du fonctionnement en mode multicast/broadcast.

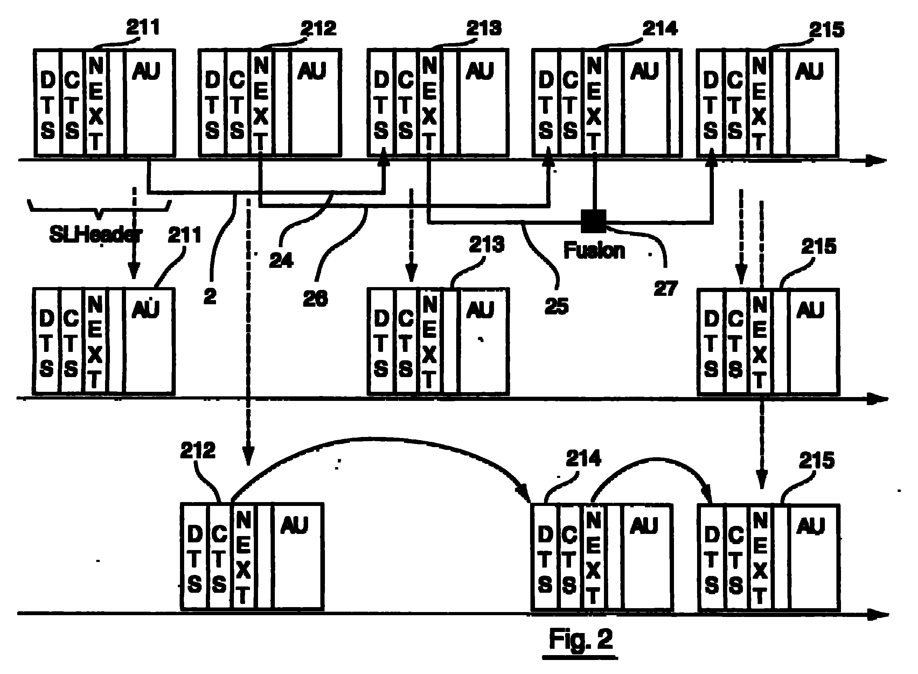

Ce fonctionnement est illustré en figure 2, qui présente :

- le flux émis 21 ;
- le flux reçu par un premier récepteur (session 1) 22 ;

- le flux reçu par un premier récepteur (session 2) 23.

La session 1 démarre sur le paquet 211, puis prend en compte l'unité de flux 213, sur lequel pointe (24) l'unité de flux 211, puis l'unité de flux 215, selon le lien 25.

La session 2, entamée légèrement après, démarre avec l'unité de flux 212, qui pointe (26) sur l'unité de flux 214.

Selon l'invention, deux (ou plus) unités de flux peuvent pointer sur une même unité de flux suivante. C'est le mécanisme de fusion 27 : les unités de flux 213 et 214 pointent toutes deux sur l'unité de flux 215. Ainsi, bien qu'ayant débutées à des instants différents, les deux sessions utilisent, après une phase « de rattrapage, les mêmes unités de flux 215. Cela permet clairement d'améliorer le rendement.

On décrit plus précisément ce fonctionnement.

Lors de la réception de l'ObjectDescriptor, le terminal examine le SLConfigDescriptor pour chacun des flux associés. Ceci permettra de décoder l'entête des paquets SL pour chacun des flux : en particulier de décoder les marqueurs.

Dans le cas Multicast/Broadcast il y aura des donc des DTS, au moins un dependencyPointer en mode 0 ou 1, et un marqueur (mode 1 « par ID ») . Le terminal sait donc quelle est la première unité à récupérer pour chacun des flux. Il essaiera donc de récupérer la première unité correspondant à chaque flux.

S'il reçoit la première unité, alors il peut commencer à afficher le contenu. Chaque unité décrit dans le « dependencyPointer » la prochaine unité à recevoir et le DTS/marqueur identifie chaque unité de façon unique.

Si le terminal ne reçoit pas la première unité (il peut s'en rendre compte ou bien par time-out ou dès qu'il reçoit une unité pour ce flux de type RAP=1 qui ne correspond pas au marqueur souhaité). Il se déconnecte (fermeture complète de session) et essaie de se reconnecter.

On notera que ce mécanisme prend en compte la fusion de sessions.

On notera également que le mode par ID est nécessaire dès que l'on ne sait pas à l'avance le DTS de la prochaine unité.

Ce mécanisme est utilisé notamment pour BIFS,OD,Textures, clips audio, clips vidéo dans MPEG-4. Pour la vidéo/audio streamée il ne sera pas utilisé.

3.5 Description du fonctionnement en mode scalable

Lors de la réception de l'ObjectDescriptor, le terminal examine le SLConfigDescriptor pour chacun des flux associés. Ceci permettra de décoder l'entête des paquets SL pour chacun des flux. Pour de la vidéo scalable, un flux servira de base et un ou plusieurs autres flux dépendront de celui-ci. Chaque flux dépendant du flux de base déclarera un DependencyDescriptor.

Pour chaque AU du flux d'amélioration, il référencera grâce au dependencyPointer les DTS des AU du flux de base dont il dépend.

Dans la plupart des cas, il y aura deux dependencyPointer dans le flux d'amélioration afin de pointer sur les deux AU de référence de la vidéo de base.

3.6 Description du fonctionnement en mode broadcast+IPMP

Dans ce cas, le BIFS, par exemple contiendra deux dependencyDescriptor dans la configuration SL. L'un pour le mode broadcast, l'un pour IPMP. Il contiendra un marqueur si le mode broadcast est par ID.

**4. Exemples d'applications :**

4.1 Diffusion d'une publicité avant de commencer un programme

Dans de nombreux cas de streaming sur Internet, les fournisseurs de contenu envoient systématiquement une publicité avant d'envoyer le contenu lui-même. Les scénarii internet étant unicast (client-serveur), cela se fait en deux phases : téléchargement de la publicité, la fin de la publicité déclenche le lancement du streaming de la vidéo.

Dans un scénario multicast ou broadcast, où l'on ne peut avoir recours à un fonctionnement client-serveur, il n'y a pas de notion de requête, de ce fait, l'utilisateur n'a généralement accès qu'à l'état courant de la présentation.

Grâce au mécanisme de référence avant ce scénario devient possible en multicast ou bien en broadcast.

En effet, il est possible d'envoyer de façon cyclique la publicité et de fusionner vers le programme en cours en fin de publicité.

Ceci permet de s'assurer par exemple que tout utilisateur visualisera la publicité au début (Pendant ce temps là, on peut réaliser le téléchargement du contenu pour la suite de façon efficace et incrémentale).

Des applications du même type peuvent être, pour chaque film diffusé, une notification de la catégorie du film (accord parental, moins de 16 ans, etc...).

### 4.2 Accès conditionnel scalable

L'idée ici est d'envoyer le même flux (unique) vidéo et audio pouvant être visualisé de façon différente en fonction des droits des utilisateurs. La signalisation des dépendances des trames vidéo par rapport aux clés de protection permet de décoder uniquement celles dont on a la clé. On peut donc décoder toutes les images pour celui qui possède toutes les clés, _ des images pour un utilisateur ayant moins de droits, etc... Ceci permet de faire de l'accès conditionnel de façon plus échelonnable.(échelonnelabilité temporelle ici)

Le scénario, plus complexe, et plus utile est celui où l'on a plusieurs flux et où l'on peut jouer à la fois sur l'échelonnabilité temporelle et en résolution

Avec ce système de dépendance par trame, il est donc possible de moduler de façon quasi-continue l'accès aux médias.

On peut donc imaginer que certains utilisateurs auraient des clés permettant de recevoir le son sur 5 voies (son spatialisé) et d'autres uniquement le son stéréo. Ce qui permettrait également une facturation plus fine...

### 4.3 Télévision Interactive MPEG-4

Au lieu de considérer que l'applicatif de la « set-top box » est statique, on peut considérer que tout cet applicatif est une application MPEG-4 qui permet d'atteindre les différentes chaînes (mécanisme d'inline). Cette application MPEG-4 serait active 24h/24h et permettrait de reconfigurer complètement les interfaces graphiques, etc...

La technique de diffusion de scène permettrait de télécharger efficacement l'interface graphique (BIFS/Textures/OD) ainsi que la partie applicative (MPEG-J).

Ceci permet un déploiement/redéploiement rapide.

**ANNEXE**

**EXEMPLE DE SPECIFICATION DE TYPE MPEG-4 SELON L'INVENTION**

**1. Définitions**

### 1.1 Unité de flux (AU : Access Unit)

Une unité de données accessible individuellement dans un flux élémentaire (*elementary stream*). Une unité de flux (ou unité d'accès) est la plus petite entité à laquelle une information temporelle peut être attribuée.

### 1.2 Objet Audiovisuel

Une représentation d'un objet naturel ou synthétisé (virtuel) qui se manifeste de façon auditive et/ou visuelle. La représentation correspond à un noeud ou à un groupe de noeuds dans la description de la séquence BIFS. Chaque objet audiovisuel est associé à zéro, un ou plusieurs flux élémentaires (*elementary streams)* utilisant un ou plusieurs descripteurs d'objet (*object descriptors).*

### 13 Séquence Audiovisuelle *(AV Scene)*

Une série d'objets audiovisuels avec des informations décrivant la scène qui définissent leurs attributs spatiaux et temporels incluant les fonctionnements résultant de l'objet et des interactions de l'usager.

### 1.4 Format Binaire de Scène (BIEFS)

Une représentation codée d'un format de description de scène paramétrique.

### 1.5 Terminal

Un système qui envoie ou reçoit et présente la représentation codée d'une scène audiovisuelle interactive comme définit par ISO/IEC 14496-1. Cela peut être un système autonome ou partie d'un système d'application se soumettant à ISO/IEC 14496.

**2. Abréviations et symboles**

| | |
|---|---|
| AU | Unité d'Accès, ou Unité de Flux (Access Unit) |
| AV | Audiovisuel (Audio-visual) |
| BIFS | Format Binaire de Scène (Binary Format for Scene) |
| CM | Mémoire de Composition (Composition Memory) |
| CTS | Estampille Temporelle de Composition (Composition Time Stamp) |
| CU | Unité de Composition (Composition Unit) |
| DAI | Interface d'Application DMIF (voir ISO/IEC 14496-6) (DMIF Application Interface) |
| DB | Mémoire Tampon de Décodage (Decoding Buffer) |
| DTS | Estampille Temporelle de Décodage (Decoding Time Stamp) |
| ES | Flux Élémentaire (Elementary Stream) |
| ESI | Interface de Flux Élémentaire (Elementary Stream Interface) |
| ESID | Identifiant de Flux Élémentaire (Elementary Stream Identifier) |
| FAP | Paramètres d'Animation Faciale (Facial Animation Parameters) |
| FAPU | Unités FAP (FAP Units) |
| NCT | Tables de Codage de Noeuds (Node Coding Tables) |
| NDT | Noeud de Donnée Type (Node Data Type) |
| OCI | Informations sur le Contenu de l'Objet (Object Content Information) |
| OCR | Référence d'Horloge Objet (Object Clock Reference) |
| OD | Descripteur d'Objet (Object Descriptor) |
| ODID | Identifiant de Descripteur d'Objet (Object Descriptor Identifier) |
| OTB | Base de Temps Objet (Object Time Base) |
| PLL | Boucle à Verrouillage de Phase (Phase Locked Loop) |
| QoS | Qualité de Service (Quality of Service) |
| SDM | Modèle de Décodeur de Système (System Decoder Model) |
| SL | Couche de Synchronisation (Synchronization Layer) |
| SL-Packet | Paquet de la Couche de Synchronisation (Synchronization Layer Packet) |
| SPS | Flux de SL-Packets (SL-Packetized Stream) |
| STB | Base de Temps Système (System Time Base) |
| TTS | Texte vers Parole (Text-To-Speech) |
| URL | Localisateur de Ressources Universelles (Universal Resource Locator) |
| VOP | Plan d'objets vidéo (Video Object Plane) |
| VRML | Langage de Modélisation de Réalité Virtuelle (Virtual Reality Modeling Language) |

**3. Configuration d'en tête de paquet SL**

3.1 Syntaxe

```
class SLConfigDescriptor extends BaseDescriptor : bit(8)
tag=SLConfigDescrTag {
    bit(8) predefined;
    if (predefined==0) {
        bit(1) useAccessUnitStartFlag;
        bit(1) useAccessUnitEndFlag;
        bit(1) useRandomAccessPointFlag;
        bit(1) hasRandomAccessUnitsOnlyFlag;
        bit(1) usePaddingFlag;
        bit(1) useTimeStampsFlag;
        bit(1) useIdleFlag;
        bit(1) durationFlag;
        bit(32) timeStampResolution;
        bit(32) OCRResolution;
        bit(8) timeStampLength; // must be ≤ 64
        bit(8) OCRLength;       // must be ≤ 64
        bit(8) AU_Length;       // must be ≤ 32
        bit(8) instantBitrateLength;
        bit(4) degradationPriorityLength;
        bit(5) AU_seqNumLength; // must be ≤ 16
        bit(5) packetSeqNumLength; // must be ≤ 16
        bit(2) extension_field_control;


    }
    if (durationFlag) {
        bit(32) timeScale;
        bit(16) accessUnitDuration;
        bit(16) compositionUnitDuration;
    }
    if (!useTimeStampsFlag) {
        bit(timeStampLength) startDecodingTimeStamp;
```

```
            bit(timeStampLength) startCompositionTimeStamp;
        }
        if (hasNextAU) {
            bit(timeStampLength) nextDecodingTimeStamp;
        }
        if (extension_field_control==0b10)
        {
        MarkerDescriptor [ 0..1]          markerDescriptors;
        DependencyDescriptor [ 0..255]    dependencyDescriptors;
        }

        dependencyMarkersCount=0;
        while(true)
        {
        bit(1) hasMoreMarkers;
        if (!hasMoreMarkers) break;

        DependencyMarker dependencyMarkers[dependencyMarkersCount++];

        }

        dependencyDescriptorCount =0;
        while(true)
        {
        bit(1) hasMoreDependencyDescriptor;
        if (!hasMoreDependencyDescriptor) break;

        DependencyDescriptor dependencyDescriptor
    [dependencyDescriptorCount++];
        }
    }
```

3.2 Sémantique

L'entête de paquet SL peut être configuré selon les besoins de chaque flux élémentaire individuel. Les paramètres qui peuvent être sélectionnés comprennent la présence, la résolution et la précision des estampilles temporelles et des références d'horloge. Cette flexibilité permet, par exemple, une faible augmentation du contenu de l'entête de paquet SL.

Pour chaque flux élémentaire, la configuration est transmise dans un SLConfigDescriptor, qui fait partie du ES_Descriptor associé à un descripteur d'objet.

Les paramètres configurables dans l'entête de paquet SL peuvent être divisés en deux classes : ceux qui s'appliquent à chaque paquet SL (par exemple OCR, sequenceNumber) et ceux qui sont strictement apparentés aux unités d'accès (par exemple : estampilles temporelles, accessUnitLength, instantBitrate, degradationPriority).

La colonne - predefined - permet de fixer par défaut les valeurs d'un ensemble de paramètres prédéfinis comme détaillé ci-dessous. Ce tableau pourra être mis à jour par amendements à ISO/IEC 14496 pour inclure les configurations prédéfinies comme exigé par les futurs profils.

**Tableau 1- Vue d'ensemble des valeurs SLConfigDescriptor prédéfinies**

| Champ de valeur prédéfini | Description |
|---|---|
| 0x00 | Clientèle (custom) |
| 0x01 | Entête de paquet SL nulle |
| 0x02 | Réservé à l'usage dans les fichiers MP4 |
| 0x03 - 0xFF | Réservé à l'usage ISO |

**Tableau 2 - Détail des valeurs SLConfigDescriptor prédéfinies**

| Champ de valeur prédéfini | 0x01 | 0x02 |
|---|---|---|
| UseAccessUnitStartFlag | 0 | 0 |
| UseAccessUnitEndFlag | 0 | 0 |
| UseRandomAccessPointFlag | 0 | 0 |
| UsePaddingFlag | 0 | 0 |
| UseTimeStampsFlag | 0 | 1 |
| UseIdleFlag | 0 | 0 |
| DurationFlag | 0 | 0 |
| TimeStampResolution | 1000 | - |
| OCRResolution | - | - |
| TimeStampLength | 32 | 0 |
| OCRlength | - | 0 |
| AU_length | 0 | 0 |
| InstantBitrateLength | - | 0 |
| DegradationPriorityLength | 0 | 0 |
| AU_seqNumLength | 0 | 0 |
| PacketSeqNumLength | 0 | 0 |
|  |  |  |
| **Champ de valeur prédéfini** | **0x01** | **0x02** |
| UseAccessUnitStartFlag | 0 | 0 |
| UseAccessUnitEndFlag | 0 | 0 |
| UseRandomAccessPointFlag | 0 | 0 |
| UsePaddingFlag | 0 | 0 |
| UseTimeStampsFlag | 0 | 1 |
| UseIdleFlag | 0 | 0 |
| DurationFlag | - | 0 |
| TimeStampResolution | 1000 | - |
| OCRResolution | - | - |
| TimeStampLength | 32 | 0 |

(suite)

| Champ de valeur prédéfini | 0x01 | 0x02 |
|---|---|---|
| OCRlength | - | 0 |
| AU_ength | 0 | 0 |
| InstantBitrateLength | - | 0 |
| DegradationPriorityLength | 0 | 0 |
| AU_seqNumLength | 0 | 0 |
| PacketSeqNumLength | 0 | 0 |
| TimeScale | - | - |
| AccessUnitDuration | - | - |
| CompositionUnitDuration | - | - |
| StartDecodingTimeStamp | - | - |
| StartCompositionTimeStamp | - | - |

useAccessUnitStartFlag - indique que le accessUnitStartFlag est présent dans chaque entête de paquet SL de ce flux élémentaire.

useAccessUnitEndFlag -indique que le accessUnitEndFlag est présent dans chaque entête de paquet SL de ce flux élémentaire.

Si ni useAccessUnitStartFlag ni useAccessUnitEndFlag ne sont actifs, cela implique que chaque paquet SL correspond à une unité d'accès complète.

useRandomAccessPointFlag - indique que le RandomAccessPointFlag est présent dans chaque entête de paquet SL de ce flux élémentaire.

hasRandomAccessUnitsOnlyFlag - indique que chaque paquet SL correspond à un point d'accès aléatoire. Dans ce cas, le randomAccessPointFlag n'a pas besoin d'être utilisé.

usePaddingFlag - indique que le paddingFlag est présent dans chaque entête de paquet SL de ce flux élémentaire.

useTimeStampsFlag - indique que les estampilles temporelles sont utilisées pour la synchronisation de ce flux élémentaire. Elles sont transportées dans les entête de paquet SL. Sinon, les paramètres accessUnitRate, composition UnitRate, startDecodingTimeStamp et startCompositionTimeStamp transportés dans cet entête de paquet SL doivent être utilisés pour la synchronisation.

L'utilisation d'estampilles temporelles de départ et de durée (useTimeStampsFlag=0) est faisable uniquement sous certaines conditions, incluant un environnement sans erreur. L'accès aléatoire n'est pas aisé.

useIdleFlag - indique que idleFlag est utilisé dans ce flux élémentaire.

durationFlag - indique que la durée constante des unités d'accès et des unités de composition pour ce flux élémentaire est signalée ultérieurement.

timeStampResolution - est la résolution des estampilles temporelles en impulsions par seconde.

OCRResolution - est la résolution de la base temporelle de l'objet en cycles par seconde.

timeStampLength - est la longueur des champs d'estampille temporelle dans les entête de paquet SL. timeStampLength doit prendre des valeurs entre zéro et 64 bits.

OCRlength - est la longueur du champ obj ectClockReference dans l'entête de paquet SL. Une suite de zéros indique qu'aucun objectClockReferences n'est présent dans ce flux élémentaire. Si OCRstreamFlag est mis, OCRLength doit être zéro. Sinon, OCRlength doit prendre des valeurs entre zéro et 64 bits.

AU_Length - est la longueur des champs accessUnitLength dans l'entête de paquet SL pour ce flux élémentaire. AU_Length doit prendre une valeur entre zéro et 32 bits.

instantBitrateLength - est la longueur du champ instantBitrate dans l'entête de parquet SL pour ce flux élémentaire.

degradationPriorityLength - est la longueur du champ degradationPriority dans l'entête de paquet SL pour ce flux élémentaire.

AU_seqNumLength - est la longueur du champ AU_sequenceNumber dans l'entête de paquet SL pour ce flux élémentaire. packetSeqNumLength - est la longueur du champ packetSequenceNumber dans l'entête de paquet SL pour ce flux élémentaire.

timeScale - est utilisé pour exprimé la durée des unités d'accès et des unités de composition. Une seconde est également divisée en parties timeScale.

accessUnitDuration - la durée d'une unité d'accès est accessUnitDuration * 1/timeScale secondes.

compositionUnitDuration - la durée d'une unité de composition est compositionUnitDuration * 1/timeScale secondes.

startDecodingTimeStamp - transporte le temps auquel la première unité d'accès de ce flux élémentaire doit être décodé. Il est transporté dans la résolution spécifiée par timeStampResolution.

startCompositionTimeStamp - transporte le temps auquel l'unité de composition correspondant à la première unité d'accès de ce flux élémentaire doit être décodé. Il est transporté dans la résolution spécifiée par timeStampResolution.

extension_field_control - Ce champs permet d'étendre le SL. La valeur 01b0 indique que les descripteurs doivent se trouver à la fin du SLConfigDescriptor.

markerDescriptors - Cette table indique une description de marqueurs pour identifier les unités d'accès suivantes dans le flux

dependencyDescriptors - Cette table indique les descripteurs de dépendance spécifiant comment référencer soit les unités d'accès précédentes soit les unités à venir.

### 4. Marker Descriptor

La syntaxe est la suivante :

```
class MarkerDescriptor extends BaseDescriptor : bit(8)
tag=DependencyMarkerTag {
    int(5) encodedMarkerLength;
    MarkerLength= encodedMarkerLength + 1;
}
```

### 5. Dependency Descriptor

5.1 syntaxe

```
abstract class DependencyDescriptor extends BaseDescriptor {
};


class SimpleDependencyDescriptor extends BaseDescriptor : bit(8)
tag=SimpleDependencyTag {
   bit(2) mode;
   bit (5) dependencyLength;
   if (mode==1 || mode==0)
   {
      bit (dependencyLength) firstvalue;
   }
};


class CompleteDependencyDescriptor extends BaseDescriptor : bit(8)
tag=CompleteDependencyTag {
   bit (2)  mode;
   bit (16) ESID ;
   bit (5) dependencyLength;
   if (mode==1 || mode==0)
   {
      int (dependencyLength) firstvalue;
   }
};
```

5.2 sémantique

*5.2.1 mode*

Quatre modes sont définis :

- Mode 0 : référence vers l'avant par DTS.
- Mode 1 : référence vers l'avant par Marqueur.
- Mode 2 : référence arrière de scalabilité.
- Mode 3 : mode IPMP.

Les modes 0 et 1 forcent chaque unité d'accès à faire référence à la prochaine unité d'accès.
Le mode 2 force chaque unité d'accès à faire référence à l'unité d'accès précédente qui est nécessaire pour décoder cette unité d'accès. (Note : Dans de nombreux cas, plus de deux dependencydescriptors sont nécessaires, pour se référer à deux unités d'accès nécessaires ou plus).
Le mode 3 permet à chaque unité d'accès de contenir un identifiant opaque, qui peut être utilisé par le système IPMP, afin de décider si le décodage et la composition de cette unité d'accès est possible.
Les modes 1 et 3 requièrent un **MarkerDescriptor** dans le flux.

*5.2.2 ESID*

Ce champ optionnel identifie le flux auquel le **DependencyDescriptor** fait référence.
Pour **SimpleDependencyDescriptor,** ESID est calculé de la manière suivante :

- Modes 0 et 1 : le flux courant.
- Mode 2 : selon **dependsOnESID**
- Mode 3 : pas applicable.

**dependencyLength -** est la longueur, soit du marqueur (si il existe) soit du decodingTimeStamp.
value - est la valeur du premier marqueur ou dts identifiant la prochaine unité d'accès à décoder

**6. Spécification de l'entête de paquet SL**

6.1 Syntaxe

```
aligned(8) class SL_PacketHeader (SLConfigDescriptor SL) {
   if (SL.useAccessUnitStartFlag)
      bit(1) accessUnitStartFlag;
   if (SL.useAccessUnitEndFlag)
      bit(1) accessUnitEndFlag;
   if (SL.OCRLength>0)
      bit(1) OCRflag;
   if (SL.useIdleFlag)
      bit(1) idleFlag;
   if (SL.usePaddingFlag)
      bit(1) paddingFlag;
   if (paddingFlag)
      bit(3) paddingBits;
```

```
if (!idleFlag && (!paddingFlag || paddingBits!=0)) {
    if (SL.packetSeqNumLength>0)
        bit(SL.packetSeqNumLength) packetSequenceNumber;
    if (SL.degradationPriorityLength>0)
        bit(1) DegPrioflag;
    if (DegPrioflag)
        bit(SL.degradationPriorityLength) degradationPriority;
    if (OCRflag)
        bit(SL.OCRLength) objectClockReference;


    if (accessUnitStartFlag) {
        if (SL.useRandomAccessPointFlag)
            bit(1) randomAccessPointFlag;
        if (SL.AU_seqNumLength >0)
            bit(SL.AU_seqNumLength) AU_sequenceNumber;
        if (SL.useTimeStampsFlag) {
            bit(1) decodingTimeStampFlag;
            bit(1) compositionTimeStampFlag;
        }
        if (SL.instantBitrateLength>0)
            bit(1) instantBitrateFlag;
        if (decodingTimeStampFlag)
            bit(SL.timeStampLength) decodingTimeStamp;
        if (compositionTimeStampFlag)
            bit(SL.timeStampLength) compositionTimeStamp;
        if (SL.AU_Length > 0)
            bit(SL.AU_Length)      accessUnitLength;
        if (instantBitrateFlag)
            bit(SL.instantBitrateLength) instantBitrate;
    }
}
if (SL.hasMarker && beginningOfAU())
{
    for (int I=0; I< markerDescriptorCount;I++)
    {
        bit(marker.length) markerValue
```

```
            }
        }
        for (int I=0; I< dependencyDescriptorCount;I++)
        {
            if (dependencyDescriptor.mode>>1 == 0)
            {
                bit(dependencyDescriptor[ I] .depLength) dependencyPointerValue;
            }
        }
    }
```

6.2 Sémantique

accessUnitStartFlag - quand il vaut un, indique que le premier octet de la charge de ce parquet SL est le départ d'une unité d'accès. Si cet élément de syntaxe est omis de la configuration de l'entête de paquet SL, sa valeur par défaut est connue du paquet SL précédent suivant la règle suivante :

accessUnitStartFlag = (le paquet SL précédent a accessUnitEndFlag=1) ? 1 : 0.
accessUnitEndFlag - quand il vaut un, indique que le dernier octet de la charge du paquet SL est le dernier octet de l'unité d'accès en cours. Si cet élément de syntaxe est omis de la configuration de l'entête de paquet SL, sa valeur par défaut est uniquement connue après réception du paquet SL suivant la règle suivante :

accessUnitEndFlag = (le paquet SL suivant a accessUnitStartFlag=1) ? 1 : 0.

Si ni AccessUnitStartFlag ni AccessUnitEndFlag ne sont configurés dans l'entête de paquet SL, cela implique que chaque paquet SL correspond à une seule unité d'accès, d'où chaque accessUnitStartFlag = accessUnitEndFlag = 1.
On notera, quand l'entête de paquet SL est configuré pour utiliser accessUnitStartFlag mais ni accessUnitEndFlag ni accessUnitLength, il n'est pas garanti que le terminal puisse déterminer la fin d'une unité d'accès avant que la suivant ait été reçue.
OCRflag - quand il vaut un, indique qu'un obj ectClockReference va suivre. La valeur par défaut pour OCRflag est zéro.
idleFlag - indique que ce flux élémentaire sera inactif (c'est-à-dire absence de données utiles) pour un laps de temps indéterminé. Ce signe peut être utilisé par le décodeur pour faire la distinction entre une absence délibérée et une absence due à une erreur de paquets SL suivants.
paddingFlag - indique la présence de remplissage dans ce paquet SL. La valeur par défaut pour paddingFlag est zéro.
paddingBits - indique le mode de données de remplissage à utiliser dans ce paquet SL. La valeur par défaut pour paddingBits est zéro.
Si paddingFlag est mis et paddingBits vaut zéro, cela indique que la charge suivante de ce paquet SL consiste uniquement en octets de remplissage. accessUnitStartFlag, randomAccessPointFlag et OCRflag ne doivent pas être mis si paddingFlag est mis et paddingBits est zéro.
Si paddingFlag est mis et paddingBits est supérieur à zéro, cela indique que la charge de ce paquet SL est suivie par des paddingBits, formés de bits à zéro pour l'alignement des octets de la charge.
packetSequenceNumber - s'il est présent, il doit être augmenté continuellement pour chaque parquet SL comme un compteur modulo. Une discontinuité au décodeur correspond à un ou plusieurs paquets SL manquants. Dans ce cas, une erreur doit être signalée à la couche de synchronisation. Si cet élément de syntaxe est omis de la configuration de l'entête de paquet SL, le contrôle de la continuité des unités de flux par la couche de synchronisation ne peut pas être accomplie pour ce flux élémentaire.
Duplication des paquets SL : les flux élémentaires qui ont un champ sequenceNumber dans leurs entêtes de paquet SL doivent utiliser la duplication des paquets SL pour la récupération des erreurs. Le(s) paquet(s) SL dupliqués doivent immédiatement suivre l'original. Le packet SequenceNumber des paquets SL dupliqués doit avoir la même valeur et chaque octet du paquet SL original doit être dupliqué, à l'exception d'un champ obj ectClockReference, si présent, qui doit encoder une valeur valide pour le paquet SL dupliqué.

degPrioFlag - quand il vaut un, indique que degradationPriority est présent dans ce paquet.

degradationPriority - indique l'importance de la charge de ce paquet SL. Le streamPriority définit la priorité de base d'un ES. degradationPriority définit une baisse de priorité pour ce paquet SL par rapport à la priorité de base. La priorité pour ce paquet SL est donnée par :

SL_PacketPriority = streamPriority - degradationPriority

degradationPriority reste à cette valeur jusqu'à la prochaine occurrence. Cette indication peut être utilisée par le décodeur du flux élémentaire ainsi que par l'adaptateur pour une instance d'une couche de distribution spécifique. La proportion de la dégradation parmi les paquets SL de différents flux élémentaires augmente au fur et à mesure que SL_PacketPriority diminue.

objectClockReference - contient une estampille temporelle objet. La valeur temporelle OTB t est reconstruite à partir de cette estampille temporelle OCR selon la formule suivante:

$$t = (objectClockReference/SL.OCRResolution) + k*(2^{SL.OCRLength}/SL.OCRResolution)$$

où k est le temps que le compteur objectClockReference a couvert.

objectClockReference est seulement présent dans l'entête de paquet SL si OCRflag est mis.

Il est possible de transporter uniquement une valeur OCR sans charge à l'intérieur d'un paquet SL.

La suite présente la sémantique des éléments de syntaxe qui sont seulement présents au début d'une unité d'accès quand signalé explicitement par accessUnitStartFlag dans le flux binaire :

randomAccessPointFlag - quand il vaut un, indique que l'accès aléatoire au contenu de ce flux élémentaire est possible. randomAccessPointFlag doit uniquement être mis si accessUnitStartFlag est mis. Si cet élément de syntaxe est omis de la configuration de l'entête de paquet SL, sa valeur par défaut est la valeur de SLConfigDescriptor.has RandomAccessUnitsOnlyFlag pour ce flux élémentaire.

AU_sequenceNumber - si présent, il doit être augmenté continuellement pour chaque unité d'accès comme un compteur modulo. Une discontinuité au décodeur correspond à une ou plusieurs unités d'accès manquantes. Dans ce cas, une erreur doit être signalée à l'utilisateur de la couche synchronisation. Si cet élément de syntaxe est omis de la configuration de l'entête de paquet SL, le contrôle de la continuité des unités de flux par la couche synchronisation ne peut pas être exécuté pour ce flux élémentaire.

Duplication des unités d'accès : les unités d'accès envoyées utilisant le même nombre de séquences que l'AU immédiatement précédente doivent être ignorées. Une telle unité d'accès dupliquée, dont l'original n'avait pas RAP mis, mais l'unité dupliquée oui, permet l'ajout de points d'accès aléatoire dans un flux émis, permettant à des clients d'entrer dans le flux à des points définis, pendant sa transmission, pendant que d'autres clients reçoivent déjà le flux.

decodingTimeStampFlag - indique qu'une estampille temporelle de décodage est présente dans ce paquet.

compositionTimeStampFlag - indique qu'une composition d'estampille temporelle est présente dans ce paquet.

accessUnitLengthFlag - indique que la longueur de cette unité d'accès est présente dans ce paquet.

instantBitrateFlag - indique qu'un instantBitrate est présent dans ce paquet.

decodingTimeStamp - est une estampille temporelle de décodage comme configuré dans le SLConfigDescriptor associé. Le temps de décodage td de cette unité d'accès est reconstruit à partir de cette estampille temporelle de décodage selon la formule :

$$td = (decodingTimeStamp/SL.timeStampResolution + k * 2^{SL.timeStampLength}/SL.timeStampResolution$$

où k est le temps que le compteur decodingTimeStamp a englobé.

Un decodingTimeStamp doit uniquement être présent si le temps décodeur est différent de la composition temporelle pour cette unité d'accès. compositionTimeStamp - est une composition d'estampille temporelle comme configuré dans le SLConfigDescriptor associé. La composition temporelle tc de la première unité de composition résulte du fait que cette unité d'accès est reconstruite à partir de cette composition d'estampille temporelle selon la formule :

$$td = (compositionTimeStamp/SL.timeStampResolution +$$

$$k * 2^{SL.timeStampLength}/SL.timeStampResolution$$

où k est le temps que le compteur compositionTimeStamp a englobé.

accessUnitLength - est la longueur de l'unité d'accès en octets. Si cet élément de syntaxe n'est pas présent ou a la valeur zéro, la longueur de l'unité d'accès est inconnue.

instantBitrate - est le taux binaire instantané en bits par seconde de ce flux élémentaire jusqu'à ce que le prochain champ instantBitrate soit trouvé.

markerValue -est la valeur d'un marqueur qui permet d'identifier l'unité d'accès. Ce marqueur est défini si markerDescriptors existe.

DependencyPointerValue - est un indice de DTS ou d'un marqueur comme définit par le DependencyDescriptor.

MarkerDescriptorCount : le nombre de descripteurs de marqueurs.

DependencyDescriptorCount : le nombre de descripteurs dépendants.

### 7. sémantique de décodage

7.1 Mécanisme de référence avant (modes 0 et 1)

Le SLConfigDescriptor associé à un ES, indique la première unité d'accès qui permet d'entrer dans le flux.

Si le mode de référence est DTS, alors le SLConfigDescriptor doit contenir un decodingTimeStamp.

Sinon, un marqueur est utilisé pour marquer chaque unité d'accès. 0 et -1 ont une signification spéciale :

// 0 signifie qu'aucune autre unité d'accès suivra,
//-1signifie que n'importe quelle unité d'accès peut être utilisée.

Chaque unité d'accès doit contenir un marqueur et un dependencypointer permettant à chaque unité d'accès d'indiquer la prochaine unité d'accès.

7.2 Mécanisme de référence arrière (mode 2)

Le SLConfigDescriptor définira n descripteurs de type DependencyDescriptor, qui indiqueront les unités d'accès dans l'ES auquel se réfère ESID.

Chaque unité d'accès du flux courant pointera les unités d'accès sur l'ES dont l'identifiant est ESID appelé ES_base au moyen de DependencyPointers en référence aux unités d'accès de ES_base (identifié par ESID) à travers leur DTS.

7.3 Mode IPMP (mode 3)

Les DependencyPointers sont transmis au système IPMP avant décodage. Ces pointeurs opaques permettent aux moyens IPMP de décider s'il est possible ou non de décoder l'unité d'accès. Il peut répondre négativement si les clefs n'ont pas été reçues, ou si les droits ne le permettent pas. Ce pointeur de dépendance est lié à l'unité de composition après décodage.

Il reviendra au système IPMP avant composition, les moyens IPMP décidant ensuite si l'unité peut être ou non présentée.

### 8. Flux de référence horloge

Un flux élémentaire de streamType = ClockReferenceStream doit être déclaré au moyen du descripteur d'objet. Il est utilisé dans le but de transporter les estampilles temporelles de référence d'horloge objet. De multiples flux élémentaires dans un ensemble de nom peuvent faire référence à un tel ClockReferenceStream au moyen de l'élément de syntaxe OCR_ES_ID dans le SLConfigDescriptor pour éviter la transmission répétée de l'information de référence horloge. Notons, cependant, que des références circulaires entre les flux élémentaires utilisant OCR_ES_I D ne sont pas permises.

Sur la couche de synchronisation, un ClockReferenceStream est réalisé en configurant la syntaxe de l'entête de paquet SL pour ce flux empaqueté au niveau SL de telle manière que seules les valeurs OCR des OCRresolution et OCRlength requis sont présents dans l'entête de paquet SL.

Il n'y a aucune charge de paquet SL présente dans un flux empaqueté-SL de streamType = ClockReferenceStream.

Dans le DecoderConfigDescriptor pour un flux de référence horloge, ObjectTypeIndieation doit être mis sur '0xFF', has RandomAccessUnitsOnlyFlag **sur un et** bufferSizeDB sur'0'.

La suite indique les valeurs recommandées pour le SLConfigDescriptor d'un flux de référence horloge :

Table 3 - SLConfigDescriptor valeurs des paramètres SLConfigDescriptor d'un pour un ClockReferenceStream

| | |
|---|---|
| useAccessUnitStartFlag | 0 |
| useAccessUnitEndFlag | 0 |
| useRandomAccessPointFlag | 0 |
| usePaddingFlag | 0 |
| useTimeStampsFlag | 0 |
| useIdleFlag | 0 |
| durationFlag | 0 |
| timeStampResolution | 0 |
| timeStampLength | 0 |
| AU_length | 0 |
| degradationPriorityLength | 0 |
| AU_seqNumLength | 0 |

## 9. Restrictions pour des flux élémentaires partageant le même objet de base temporelle

Lorsqu'il est possible de partager un objet de base temporelle entre plusieurs flux élémentaires à travers OCR_ES _ID, un nombre de restrictions pour l'accès à ces flux élémentaires et à leur traitement existent, comme suit :

Quand plusieurs flux élémentaires partagent un simple objet de base temporelle, les flux élémentaires sans information de référence horloge objet intégrée ne doivent pas être utilisés par le terminal, même s'ils sont accessibles, jusqu'à ce que le flux élémentaire transportant l'information de référence horloge objet devienne accessible.

Si un flux élémentaire sans information de référence horloge objet intégrée est rendu disponible au terminal après le flux élémentaire transportant l'information de référence horloge objet, il doit être délivré en synchronisation avec le(s) autre(s) flux. Notons que cela implique qu'un tel flux ne doive pas être délivré depuis son début, en fonction de la valeur courante de l'objet de base temporelle.

Quand un flux élémentaire transportant une information de référence horloge objet devient indisponible ou est utilisé par ailleurs (par exemple en pause) tous les autres flux élémentaires qui utilisent le même objet de base temporelle doivent suivre cette approche, c'est-à-dire devenir indisponibles ou être manipulés dans le même sens.

Lorsqu'un flux élémentaire sans information de référence horloge objet intégrée devient indisponible, cela n'a pas d'incidence sur les autres flux élémentaires qui partagent le même objet de base temporelle.

## 10. Utilisation des options de configuration pour les références d'horloge et les valeurs d'estampilles temporelles

10.1 Résolution de l'ambiguïté dans la récupération d'un objet de base temporelle

Du fait de la longueur limitée des valeurs objectClockReference ces estampilles temporelles peuvent être ambigues. La valeur temporelle OTB peut être reconstruite chaque fois qu'un objectClockReference est transmis dans les entêtes d'un paquet SL selon la formule suivante :

$$t_{OTB\_reconstructed} = (objectClockReference/SL.OCRResolution) + k*(2^{SL.OCRLength}/SL.OCRResolution)$$

avec k étant une valeur entière indiquant le nombre de boucles. La base temporelle résultante $t_{OTB\_reconstructed}$ est mesurée en secondes.

Quand le premier objectClockReference pour un flux élémentaire est acquis, la valeur k doit être mise à un. Pour chaque occurrence suivante de obj ectClockReference la valeur k est estimée comme suit :

Le terminal doit comprendre des moyens pour estimer la valeur de l'objet de base temporelle à chaque instant.

Chaque fois qu'un objectClockReference est reçu, la valeur estimée courante de l'OTB $t_{OTB\_estimated}$ doit être échantillonnée. Alors, $t_{OTB\_rec}(k)$ est évalué pour différentes valeurs de k. La valeur k qui minimise le terme I $t_{OTB\_estimated}$ - $t_{OTB\_rec(k)}$I doit être considérée comme la valeur correcte de $t_{OTB\_reconstructed}$. Cette valeur doit être utilisée comme un nouvel apport au mécanisme d'estimation de l'objet de base temporelle.

L'application doit garantir que cette procédure produit une valeur non ambiguë de k en sélectionnant une longueur et une résolution appropriées de l'élément objectClockReference et une fréquence suffisamment élevée des valeurs d'insertion de objectClockReference dans le flux élémentaire. Les choix pour ces valeurs dépendent de la gigue de délivance pour les paquets SL ainsi que de l'écart maximum prévu entre les horloges du terminal transmetteur et receveur.

10.2 Résolution de l'ambiguïté dans la récupération de l'estampille temporelle

Du fait de la longueur limitée des valeurs decodingTimeStamp et compositionTimeStamp ces estampilles temporelles peuvent devenir ambiguës, comme le montre la formule suivante :

$$t_{ts}(m) = (TimeStamp/SL.timeStampResolution) + m*(2^{SL.timeStampLength}/SL.timeStampResolution)$$

avec TimeStamp étant soit un decodingTimeStamp soit un compositionTimeStamp et m étant une valeur entière indiquant le nombre de boucles.

La valeur correcte $t_{timestamp}$ de l'estampille temporelle peut être estimée comme suit :

Chaque fois qu'un TimeStamp est reçu, la valeur estimée courante de l'OTB $t_{OTB\_estimated}$ doit être échantillonnée. $t_{ts}(m)$ est évalué pour différentes valeurs de m. La valeur m qui minimise le terme | $t_{OTB\_estimated}$ $t_{ts}(m)$| est considérée comme la valeur correcte de $t_{timestamp}$.

L'application peut choisir, séparément pour chaque flux élémentaire individuel, la longueur et la résolution des estampilles temporelles, afin de respecter ses exigences sur le positionnement non ambigu des événements temporels. Ce choix dépend du temps maximum pendant lequel un paquet SL avec un TimeStamp peut être envoyé, après le moment indiqué par le TimeStamp, ainsi qu'à la précision demandée au positionnement temporel.

102 remarques sur l'usage des références d'horloge objet et des estampilles temporelles

La ligne temporelle d'une base de temps objet permet de distinguer deux instants séparés par plus d'1/SL.OCRResolution. OCRResolution doit être choisi suffisamment grand pour obtenir la précision dont a besoin l'application pour synchroniser un ensemble de flux élémentaires.

Les estampilles temporelles et de composition permettent de distinguer deux instants séparés par plus d'l/SL.timeStampResolution. timeStampResolution doit être choisi suffisamment grand pour obtenir la précision dont a besoin l'application en terme de repérage des unités d'accès pour un flux élémentaire donné.

Un TimeStampResolution plus élevé que le OCRResolution ne permettra pas d'obtenir une meilleure discrimination entre les événements. Si TimeStampResolution est plus faible que le OCRResolution, les événements pour ce flux spécifique ne peuvent pas être repérés avec la précision maximum possible avec ce OCRResolution donné.

Le paramètre OCRLength est signalé dans la configuration de l'entête SL. $2^{SL.OCRLength}$/SL.OCRResolution est l'intervalle de temps couvert par le compteur objectClockReference avant qu'il boucle. OCRLength doit être choisi suffisamment élevé pour respecter les besoins de l'application pour un positionnement non ambigu des événements temporels pour un ensemble de flux élémentaires.

Lorsqu'une application connaît la valeur k définie plus haut, la ligne temporelle OTB est claire pour chaque valeur temporelle. Quand l'application ne peut pas reconstruire le facteur k, comme par exemple dans une application qui permet l'accès aléatoire sans information complémentaire, la ligne temporelle OTB est ambiguë modulo $2^{SL.OCRLength}$/SL.OCRResolution. Ainsi, chaque estampille temporelle se référant à cet OTB est ambiguë. Il peut, cependant, être considéré clair à l'intérieur d'un environnement d'application à travers la connaissance de la gigue maximum supposée et des contraintes sur la durée pendant laquelle une unité d'accès peut être envoyée avant son instant de décodage.

Notons que les flux élémentaires qui choisissent un intervalle de temps $2^{SL.time\ Stamp\ Length}$/SL.timeStampResolution supérieur que $2^{SL.OCRLength}$/SL.OCRResolution ne peuvent repérer de façon non ambiguë les événements temporels que dans le plus petit des deux intervalles.

Dans certains cas, lorsque k et m ne peuvent être estimés correctement, le modèle tampon peut être transgressé, ce qui entraîne des opérations et des résultats imprévisibles du décodeur.

Par exemple, si on considère une application qui veut synchroniser les flux élémentaires avec une précision d'1 ms, OCRResolution doit être choisi égal ou supérieur à 1000 (le temps entre deux impulsions successives de l'OCR est alors égal à 1ms). Supposons OCRResolution=2000.

L'application suppose une gigue entre le STB et le OTB de 0.1% (c'est-à-dire 1ms par seconde). Les horloges doivent par conséquent être ajustés au moins chaque seconde (c'est-à-dire, dans le pire des cas, que les horloges auront dévié d'1ms, ce qui est la contrainte de précision). Supposons que des objectClockReference sont envoyés chaque 1s.

L'application veut avoir une ligne temporelle OTB claire de 24h sans avoir besoin de reconstruire le facteur k. Le OCRLength est alors choisi en conséquence de même que $2^{SL.OCR\ Length}$/SL.OCRResolution=24h.

Supposons maintenant que l'application veut synchroniser les événements à l'intérieur d'un flux élémentaire seul avec la précision de 10 ms. TimeStampResolution doit être choisi égal ou supérieur à 100 (le temps entre deux impulsions successives du TimeStamp est alors égal à 10ms). Supposons TimeStampResolution=200.

L'application veut être capable d'envoyer les unités d'accès à un maximum d'une minute avant leur temps décodeur ou de composition. Le timeStampLength est alors choisi comme

$2^{SL.time\ Stamp\ Length}$/SL.timeStampResolution = 2 minutes.

## Revendications

**1.** Procédé de transmission d'au moins un flux de données multimédia vers au moins un terminal, le ou lesdits flux étant organisés en unités d'accès,
**caractérisé en ce qu'**au moins certaines desdites unités d'accès comprennent au moins un pointeur désignant au moins une unité d'accès, antérieure ou postérieure, dudit flux ou d'un autre flux de données multimédia, dite unité de dépendance,
de façon qu'un traitement de ladite unité d'accès ne soit pas effectué, dans ledit terminal, si la ou lesdites unités de dépendance n'ont pas été reçues.

**2.** Procédé de transmission selon la revendication 1, **caractérisé en ce qu'**il comprend la transmission d'au moins deux flux de données multimédia transmis séparément, une unité d'accès d'un premier flux pointant vers au moins une unité de dépendance d'au moins un second flux, ladite unité d'accès du premier flux comprenant des données d'enrichissement des données contenues dans le ou lesdits seconds flux.

**3.** Procédé de transmission selon la revendication 2, **caractérisé en ce que** lesdits flux de données multimédia correspondent à des niveaux hiérarchiques différents d'un codage hiérarchique, le traitement d'une unité d'accès d'un niveau hiérarchique donné n'étant effectué que si les unités d'accès du ou des niveaux hiérarchiques inférieurs correspondants ont été reçus.

**4.** Procédé de transmission selon l'une quelconque des revendications 2 et 3, **caractérisé en ce que** ladite unité d'accès pointe sur au moins une unité de dépendance, définissant une séquence d'unités de dépendance.

**5.** Procédé de transmission selon l'une quelconque des revendications 1 à 4, **caractérisé en ce qu'**au moins un desdits pointeurs permet de retrouver au moins une unité de dépendance comprenant des données permettant le décodage et/ou le décryptage de l'unité d'accès considérée.

**6.** Procédé de transmission selon la revendication 5, **caractérisé en ce que** la ou lesdites unités de dépendance comprend des données permettant à un terminal de décider si les données d'une unité d'accès considérée doivent être décodées et/ou décryptées, puis affichées après décodage.

**7.** Procédé de transmission selon l'une quelconque des revendications 1 à 6, **caractérisé en ce qu'**au moins un desdits pointeurs pointent vers des données susceptibles d'être connues dudit terminal, de façon que ce dernier puisse décider de sa capacité ou de son incapacité à traiter l'unité d'accès correspondante.

**8.** Procédé de transmission selon l'une quelconque des revendications 1 à 7, **caractérisé en ce qu'**au moins une desdites unités d'accès comprend au moins un pointeur désignant au moins une unité d'accès dudit flux ou d'un autre flux, susceptible d'être reçue prochainement.

**9.** Procédé de transmission selon la revendication 8, **caractérisé en ce que** la ou lesdites unités d'accès susceptible d'être reçue prochainement possède un marqueur, permettant de faire un lien avec le ou lesdits pointeurs.

**10.** Procédé de transmission selon l'une quelconque des revendications 8 et 9, **caractérisé en ce que** les pointeurs d'au moins deux unités d'accès similaires transmises à des instants distincts pointent vers une même unité d'accès susceptible d'être reçue prochainement.

**11.** Procédé de transmission selon l'une quelconque des revendications 1 à 10, **caractérisé en ce qu'**il met en oeuvre un indicateur indiquant le rôle du ou des pointeurs, parmi au moins deux des rôles appartenant au groupe comprenant :

- désignation d'au moins une unité d'accès de dépendance devant être décodée pour permettre la prise en compte de l'unité d'accès considérée ;
- désignation d'au moins une unité d'accès de dépendance comprenant des données nécessaires au décodage et/ou au décryptage de l'unité d'accès considérée, et/ou d'une référence à un état d'un système de protection ;
- désignation d'au moins une unité d'accès postérieure.

**12.** Procédé de transmission selon la revendication 11, **caractérisé en ce qu'**au moins certaines desdites unités d'accès comprennent un descripteur de dépendance, définissant ledit rôle.

**13.** Procédé de transmission selon l'une quelconque des revendications 1 à 12, **caractérisé en ce qu'**au moins certaines desdites unités d'accès comprennent un marqueur de dépendance, permettant son identification en tant qu'unité de dépendance.

**14.** Procédé de transmission selon l'une quelconque des revendications 1 à 13, **caractérisé en ce qu'**au moins certaines desdites unités d'accès comprennent un marqueur d'identification de ladite unité de dépendance dans ledit flux.

**15.** Procédé de transmission selon l'une quelconque des revendications 1 à 14, **caractérisé en ce qu'**il est mis en oeuvre au niveau synchronisation, de façon qu'aucun traitement préalable d'une unité d'accès reçue ne soit nécessaire.

**16.** Flux de données multimédia organisé en unités d'accès transmises indépendamment les unes des autres, **caractérisé en ce qu'**au moins certaines desdites unités d'accès comprennent au moins un pointeur désignant au moins une unité d'accès, antérieure ou postérieure, dudit flux ou d'un autre flux susceptible d'avoir été reçue précédemment dans un terminal, dite unité de dépendance.

**17.** Terminal apte à recevoir au moins un flux de données multimédia organisé en unités d'accès transmises indépendamment les unes des autres, **caractérisé en ce qu'**au moins certaines desdites unités d'accès comprennent au moins un pointeur désignant au moins une unité d'accès, antérieure ou postérieure, dudit flux ou d'un autre flux de données multimédia susceptible d'avoir été reçue précédemment dans un terminal, dite unité de dépendance.

**Claims**

**1.** Method for transmitting at least one multimedia data stream to at least one terminal, said stream or streams being organized into access units, **characterized in that** at least some of said access units comprise at least one pointer designating at least one access unit, anterior or posterior, of said stream or of another multimedia data stream, termed a dependency unit,
in such a way that a processing of said access unit is not performed, in said terminal, if said dependency unit or units have not been received.

2. Transmission method according to Claim 1, **characterized in that** it comprises the transmission of at least two separately transmitted multimedia data streams, an access unit of a first stream pointing to at least one dependency unit of at least one second stream, said access unit of the first stream comprising data for enriching the data a contained in said second stream or streams.

3. Transmission method according to Claim 2, **characterized in that** said multimedia data streams correspond to different hierarchical levels of a hierarchical coding, the processing of an access unit of a given hierarchical level being performed only if the access units of the corresponding lower hierarchical level or levels have been received.

4. Transmission method according to either of Claims 2 and 3, **characterized in that in that** said access unit points at at least one dependency unit, defining a sequence of dependency units.

5. Transmission method according to any one of Claims 1 to 4, **characterized in that** at least one of said pointers makes it possible to retrieve at least one dependency unit comprising data allowing the decoding and/or the decryption of the access unit concerned.

6. Transmission method according to Claim 5, **characterized in that** said dependency unit or units comprises data allowing a terminal to decide whether the data of an access unit concerned must be decoded and/or decrypted, and then displayed after decoding.

7. Transmission method according to anyone of Claims 1 to 6, **characterized in that** at least one of said pointers point to data liable to be known to said terminal, in such a way that the latter can decide on its ability or on its inability to process the corresponding access unit.

8. Transmission method according to any one of Claims 1 to 7, **characterized in that** at least one of a access units comprises at least one pointer designating at least one access unit of said stream or of another stream, liable to be received shortly.

9. Transmission method according to Claim 8, **characterized in that** said access unit or units liable to be received shortly possesses a marker, making it possible to effect a link with said pointer or pointers.

10. Transmission method according to either of Claims 8 and 9, **characterized in that** the pointers of at least two similar access units transmitted at distinct instants point to one and the same access unit liable to be received shortly.

11. Transmission method according to any one of Claims 1 to 10, **characterized in that** it implements an indicator indicating the role of the pointer or pointers, from among at least two of the roles belonging to the group comprising:

- designation of at least one dependency consideration access unit having to be decoded to allow the consideration of the access unit concerned;
- designation of at least one dependency access unit comprising data necessary for the decoding and/or for the decryption of the access unit concerned, and/or of a reference to a state of a protection system;
- designation of at least one posterior access unit.

12. Transmission method according to Claim 11, **characterized in that** at least some of said access units comprise a dependency descriptor, defining said role.

13. Transmission method according to any one of Claims 1 to 12, **characterized in that** at least some of said access units comprise a dependency marker, allowing its identification in the guise of dependency unit.

14. Transmission method according to any one of Claims 1 to 13, **characterized in that** at least some of said access units comprise a marker for identifying said dependency unit in said stream.

15. Transmission method according to any one of Claims 1 to 14, **characterized in that** it is implemented at the synchronization level, in such a way that no prior processing of an access unit received is necessary.

16. Multimedia data stream organized into access units transmitted independently of one another,

**characterized in that** at least some of said access units comprise at least one pointer designating at least one access unit, anterior or posterior, of said stream or of another stream liable to have been received previously in a terminal, termed a dependency unit.

**17.** Terminal able to receive at least one multimedia data stream organized into access units transmitted independently of one another,
**characterized in that** at least some of said access units comprise at least one pointer designating at least one access unit, anterior or posterior, of said stream or of another multimedia data stream liable to have been received previously in a terminal, termed a dependency unit.

**Patentansprüche**

**1.** Verfahren zur Übertragung mindestens eines Multimediadatenstroms an mindestens ein Endgerät, wobei der Strom oder die Ströme in Zugriffseinheiten organisiert ist (sind),
**dadurch gekennzeichnet, dass** mindestens bestimmte der Zugriffseinheiten mindestens einen Zeiger enthalten, der mindestens eine vorhergehende oder nachfolgende Zugriffseinheit des Stroms oder eines anderen Multimediadatenstroms, Abhängigkeitseinheit genannt, bezeichnet,
so dass eine Verarbeitung der Zugriffseinheit in dem Endgerät nicht durchgeführt wird, wenn die Abhängigkeitseinheit (en) nicht empfangen wurde(n).

**2.** Übertragungsverfahren nach Anspruch 1, **dadurch gekennzeichnet, dass** es die Übertragung von mindestens zwei getrennt übertragenen Multimediadatenströmen enthält, wobei eine Zugriffseinheit eines ersten Stroms auf mindestens eine Abhängigkeitseinheit mindestens eines zweiten Stroms zeigt, wobei die Zugriffseinheit des ersten Stroms Anreicherungsdaten der in dem zweiten Strom oder den zweiten Strömen enthaltenen Daten enthält.

**3.** Übertragungsverfahren nach Anspruch 2, **dadurch gekennzeichnet, dass** die Multimediadatenströme unterschiedlichen hierarchischen Ebenen einer hierarchischen Codierung entsprechen, wobei die Verarbeitung einer Zugriffseinheit einer gegebenen hierarchischen Ebene nur durchgeführt wird, wenn die Zugriffseinheiten der entsprechenden niedrigeren hierarchischen Ebene(n) empfangen wurden.

**4.** Übertragungsverfahren nach einem der Ansprüche 2 und 3, **dadurch gekennzeichnet, dass** die Zugriffseinheit auf mindestens eine Abhängigkeitseinheit zeigt, die eine Folge von Abhängigkeitseinheiten definiert.

**5.** Übertragungsverfahren nach einem der Ansprüche 1 bis 4, **dadurch gekennzeichnet, dass** mindestens einer der Zeiger es ermöglicht, mindestens eine Abhängigkeitseinheit zu finden, die Daten enthält, welche die Decodierung und/oder die Entschlüsselung der betreffenden Zugriffseinheit erlauben.

**6.** Übertragungsverfahren nach Anspruch 5, **dadurch gekennzeichnet, dass** die Abhängigkeitseinheit(en) Daten enthält(enthalten), die es einem Endgerät ermöglichen zu entscheiden, ob die Daten einer betrachteten Zugriffseinheit decodiert und/oder entschlüsselt und dann nach der Decodierung angezeigt werden sollen.

**7.** Übertragungsverfahren nach einem der Ansprüche 1 bis 6, **dadurch gekennzeichnet, dass** mindestens einer der Zeiger auf Daten zeigt, die dem Endgerät bekannt sein können, damit letzteres über seine Fähigkeit oder Unfähigkeit entscheiden kann, die entsprechende Zugriffseinheit zu verarbeiten.

**8.** Übertragungsverfahren nach einem der Ansprüche 1 bis 7, **dadurch gekennzeichnet, dass** mindestens eine der Zugriffseinheiten mindestens einen Zeiger enthält, der mindestens eine Zugriffseinheit des Stroms oder eines anderen Stroms bezeichnet, die demnächst empfangen werden kann.

**9.** Übertragungsverfahren nach Anspruch 8, **dadurch gekennzeichnet, dass** die Zugriffseinheit(en), die demnächst empfangen werden kann(können), einen Marker besitzt(besitzen), der es ermöglicht, eine Verlinkung mit dem Zeiger oder den Zeigern zu erstellen.

**10.** Übertragungsverfahren nach einem der Ansprüche 8 und 9, **dadurch gekennzeichnet, dass** die Zeiger von mindestens zwei gleichen Zugriffseinheiten, die in unterschiedlichen Zeitpunkten übertragen werden, auf die gleiche Zugriffseinheit zeigen, die demnächst empfangen werden kann.

11. Übertragungsverfahren nach einem der Ansprüche 1 bis 10, **dadurch gekennzeichnet, dass** es einen Anzeiger anwendet, der die Aufgabe des oder der Zeiger unter mindestens zwei der Aufgaben anzeigt, die zu der Gruppe gehören, die enthält:

    - Bezeichnung mindestens einer Abhängigkeits-Zugriffseinheit, die decodiert werden muss, um die Berücksichtigung der betreffenden Zugriffseinheit zu erlauben;
    - Bezeichnung mindestens einer Abhängigkeits-Zugriffseinheit, die für die Decodierung und/oder die Entschlüsselung der betreffenden Zugriffseinheit notwendige Daten enthält, und/oder eines Bezugs auf einen Zustand eines Schutzsystems;
    - Bezeichnung mindestens einer nachfolgenden Zugriffseinheit.

12. Übertragungsverfahren nach Anspruch 11, **dadurch gekennzeichnet, dass** mindestens bestimmte der Zugriffseinheiten einen Abhängigkeits-Deskriptor enthalten, der die Aufgabe definiert.

13. Übertragungsverfahren nach einem der Ansprüche 1 bis 12, **dadurch gekennzeichnet, dass** mindestens bestimmte der Zugriffseinheiten einen Abhängigkeits-Marker enthalten, der ihre Identifizierung als Abhängigkeitseinheit erlaubt.

14. Übertragungsverfahren nach einem der Ansprüche 1 bis 13, **dadurch gekennzeichnet, dass** mindestens bestimmte der Zugriffseinheiten einen Marker zur Identifizierung der Abhängigkeitseinheit im Strom enthalten.

15. Übertragungsverfahren nach einem der Ansprüche 1 bis 14, **dadurch gekennzeichnet, dass** es auf der Synchronisationsebene angewendet wird, damit keine Vorab-Verarbeitung einer empfangenen Zugriffseinheit notwendig ist.

16. Multimediadatenstrom, der in unabhängig voneinander übertragenen Zugriffseinheiten organisiert ist, **dadurch gekennzeichnet, dass** mindestens bestimmte der Zugriffseinheiten mindestens einen Zeiger enthalten, der mindestens eine vorhergehende oder nachfolgende Zugriffseinheit des Stroms oder eines anderen Stroms, Abhängigkeitseinheit genannt, bezeichnet, die vorher in einem Endgerät empfangen worden sein kann.

17. Endgerät, das mindestens einen Multimediadatenstrom empfangen kann, der in Multimedia-Zugriffseinheiten organisiert ist, die unabhängig voneinander übertragen werden,
**dadurch gekennzeichnet, dass** mindestens bestimmte der Zugriffseinheiten mindestens einen Zeiger enthalten, der mindestens eine vorhergehende oder nachfolgende Zugriffseinheit des Stroms oder eines anderen Multimediadatenstroms, Abhängigkeitseinheit genannt, bezeichnet, die vorher in einem Endgerät empfangen worden sein kann.

DTS | CTS | Dep1 | Dep2 | | AU

11

10

SLHeader

SLPayload=AU

Flux
dépendant

111

13

112

12

DTS | CTS | | AU

DTS | CTS | | AU

SLHeader

SLHeader

Flux
de base

141

142

14

EP 1 483 915 B1

30

**Fig. 1**

211   212   213   214   215

| D T S | C T S | N E X T | AU |

SL Header   211

2

24   26

213

Fusion

25   27

215

212   214   215

**Fig. 2**

Fig. 3

Fig. 4

**EP 1 483 915 B1**

**RÉFÉRENCES CITÉES DANS LA DESCRIPTION**

**Documents brevets cités dans la description**

• EP 014600462 A